# EUROPÄISCHE PATENTSCHRIFT

(11) **EP 4 463 037 B1**
(45) Veröffentlichungstag und Bekanntmachung des Hinweises auf die Patenterteilung: **23.04.2025**
(21) Anmeldenummer: 23832702.7
(22) Anmeldetag: 12.12.2023
(51) Int. Cl.: A46D 3/04, A46D 1/08, A46D 3/08

(54) **VERFAHREN ZUM ABTEILEN VON BORSTENBÜNDELN, ABTEILVORRICHTUNG UND BÜRSTENSTOPFMASCHINE**
METHOD FOR SEGMENTING BRISTLE BUNDLES, SEGMENTING DEVICE, AND BRUSH-TUFTING MACHINE
PROCÉDÉ DE SEGMENTATION DE FAISCEAUX DE POILS, DISPOSITIF DE SEGMENTATION ET MACHINE DE TOUFFETAGE DE BROSSE

(30) Priorität: 16.01.2023 DE 102023100859
(43) Veröffentlichungstag der Anmeldung: 20.11.2024
(73) Patentinhaber: Zahoransky AG, 79674 Todtnau (DE)
(72) Erfinder: STEINEBRUNNER, Robert, 79674 Todtnau (DE)
(74) Vertreter: Mertzlufft-Paufler, Cornelius
(86) Internationale Anmeldenummer: PCT/EP2023/085425
(87) Internationale Veröffentlichungsnummer: WO 2024/153402

(56) Entgegenhaltungen:
- WO-A1-2012/084245
- DE-C- 929 124

## Beschreibung

Die Erfindung betrifft ein Verfahren zum Abteilen von Borstenbündeln aus einem Vorrat an losen Borstenfilamenten, wobei ein Bündelabteiler mit einer Abteilkerbe in einer Abteilbewegung an dem Vorrat an losen Borstenfilamenten vorbeibewegt wird, dabei ein Borstenbündel aus dem Vorrat abgeteilt wird und das Borstenbündel in die Abteilkerbe gelangt.

Ferner betrifft die Erfindung auch eine Abteilvorrichtung zum Abteilen von Borstenbündeln aus einem Vorrat an losen Borstenfilamenten. Die Vorrichtung kann zur Durchführung des zuvor genannten Verfahrens eingerichtet sein. Ferner wird auch eine Bürstenstopfmaschine mit einer derartigen Abteilvorrichtung vorgeschlagen.

Borstenbündel werden zur Fertigung von Bürsten, beispielsweise von Zahnbürsten benötigt. Die Borstenbündel können mit einem Bündelabteiler einer Abteilvorrichtung aus einem Vorrat an losen Borstenfilamenten abgeteilt werden. Dazu kann der Bündelabteiler in einer Abteilbewegung an dem Vorrat an losen Borstenfilamenten vorbeibewegt werden. Eine Abteilkerbe, die an dem Bündelabteiler ausgebildet ist, wird dabei durch einen Abteilbereich an dem Vorrat an losen Borstenfilamenten bewegt, wodurch Borstenfilamente in die Abteilkerbe gelangen und dort dann als Borstenbündel vorliegen.

Mithilfe des Bündelabteilers kann das abgeteilte Borstenbündel anschließend einem Stopfwerkzeug einer Bürstenstopfmaschine zugeführt werden. Das Stopfwerkzeug kann das Borstenbündel dann aus der Abteilkerbe entnehmen und in ein Aufnahmeloch eines bereitgehaltenen Bürstenkörpers stopfen.

Beim Abteilen vom Borstenbündeln aus einem Vorrat an losen Borstenfilamenten wird angestrebt, Borstenbündel mit einer möglichst konstanten Anzahl von Borstenfilamenten abzuteilen. Die Anzahl der Borstenfilamente, die in einem Borstenbündel zusammengefasst sind, wird durch die Form und Größe der Abteilkerbe bestimmt und kann die Gebrauchseigenschaften des Borstenbündels beeinflussen. Die Abteilkerbe sollte daher bei jedem Abteilvorgang möglichst vollständig mit Borstenfilamenten befüllt werden. Dies ermöglicht die Bereitstellung von Borstenbündeln, die eine übereinstimmende oder nur gering voneinander abweichende Anzahl von Borstenfilamenten umfassen.

Dokument DE 929 124 C offenbart eine Stopfmaschine, die eine Richtungsänderung der Abteilkerbe außerhalb eines beliebigen Abteilbereichs des Vorrats offenbart.

Aufgabe der Erfindung ist es somit, ein Verfahren zum Abteilen von Borstenbündeln, eine Abteilvorrichtung zum Abteilen von Borstenbündeln und eine Bürstenstopfmaschine der eingangs genannten Art bereitzustellen, die eine zuverlässige und konstante Befüllung der Abteilkerbe mit Borstenfilamenten begünstigen.

Zur Lösung der Aufgabe wird zunächst ein Verfahren zum Abteilen von Borstenbündeln aus einem Vorrat an losen Borstenfilamenten vorgeschlagen, das die Mittel und Merkmale des unabhängigen, auf ein derartiges Verfahren gerichteten Anspruchs aufweist. Zur Lösung der Aufgabe wird somit insbesondere ein Verfahren zum Abteilen von Borstenbündeln aus einem Vorrat an losen Borstenfilamenten vorgeschlagen, wobei ein Bündelabteiler mit einer Abteilkerbe in einer Abteilbewegung an dem Vorrat an losen Borstenfilamenten vorbeibewegt, ein Borstenbündel dabei aus dem Vorrat abgeteilt wird und in die Abteilkerbe gelangt, wobei die Abteilkerbe bei Ausführung der Abteilbewegung ihre Bewegungsrichtung in einem Abteilbereich am Vorrat zumindest zweimal, vorzugsweise zumindest dreimal, ändert. Durch die Änderung der Bewegungsrichtung der Abteilkerbe beim Abteilen von Borstenbündeln aus dem Vorrat an losen Borstenfilamenten im Abteilbereich kann die Befüllung der Abteilkerbe begünstigt werden. Beim Abteilen von Borstenbündeln aus dem Vorrat an losen Borstenfilamenten kann eine in Bewegungsrichtung der Abteilkerbe bei Durchführung der Abteilbewegung an losen Borstenfilamenten hintere Kante, die die Abteilkerbe begrenzt, eine maßgebliche Rolle spielen. Im Abteilbereich der Abteilkerbe zugewandte Borstenfilamente gelangen bei Ausführung der Abteilbewegung in Kontakt mit dieser hinteren Kante und werden über diese in die Abteilkerbe geleitet. Die Befüllung der Abteilkerbe erfolgt somit zumindest zum Teil über diese in Bewegungsrichtung der Abteilkerbe jeweils hintere Kante der Abteilkerbe. Durch den Wechsel der Bewegungsrichtung der Abteilkerbe bei Ausführung der Abteilbewegung im Abteilbereich am Vorrat an losen Borstenfilamenten kann die Abteilkerbe mehrmals von unterschiedlichen Richtungen aus mit Borstenfilamenten befüllt werden. Dies begünstigt eine Verteilung der Borstenfilamente in der Abteilkerbe. Dadurch, dass die Abteilkerbe bei Ausführung der Abteilbewegung in einem Abteilbereich am Vorrat erfindungsgemäß zumindest zweimal, vorzugsweise zumindest dreimal, ihre Bewegungsrichtung ändert, kann die Abteilkerbe damit besonders zuverlässig und möglichst vollständig mit Borstenfilamenten befüllt werden.

Eine gerade Anzahl von Richtungswechseln der Abteilkerbe bei Ausführung der Abteilbewegung im Abteilbereich ermöglicht, die Abteilkerbe an einer Seite des Abteilbereichs in den Abteilbereich zu bewegen und an einer anderen Seite des Abteilbereichs aus dem Abteilbereich zu entfernen.

Bei einer ungeraden Anzahl von Richtungswechseln kann die Abteilkerbe über die Seite aus dem Abteilbereich entfernt werden, über die die Abteilkerbe zuvor in den Abteilbereich bewegt wurde.

Bei einer Ausführungsform des Verfahrens kann die Abteilkerbe bei Ausführung der Abteilbewegung zumindest zwei, vorzugsweise zumindest drei Umkehrpunkte passieren, die in dem Abteilbereich am Vorrat loser Borstenfilamente angeordnet sind. Die Umkehrpunkte können hierbei beispielsweise an unterschiedlichen Positionen im Abteilbereich angeordnet sein. Die Abteilbewegung, in der die Abteilkerbe am Vorrat loser Borstenfilamente durch den Abteilbereich bewegt wird, kann einen sinusartigen oder sinusförmigen Verlauf aufweisen.

Wenn die Abteilkerbe bei Ausführung der Abteilbewegung im Abteilbereich zumindest zwei, vorzugsweise zumindest drei, Umkehrpunkte passiert, ist es möglich, den Abteilbereich am Vorrat loser Borstenfilamente, kleiner zu gestalten, ohne jedoch die Verweilzeit der Abteilkerbe im Abteilbereich am Vorrat loser Borstenfilamente zu reduzieren. Die Verweilzeit der Abteilkerbe im Abteilbereich bei Ausführung der Abteilbewegung kann die Befüllung der Abteilkerbe mit Borstenfilamenten ebenfalls beeinflussen. Insgesamt ermöglicht das Verfahren somit eine Verringerung der Abmessungen des Abteilbereichs und damit eine Verringerung des Platzbedarfs für ein Borstenmagazin, in dem die Borstenfilamente des Vorrats an losen Borstenfilamenten bevorratet werden können.

Auf diese Weise ist es möglich, eine Abteilvorrichtung bereitzustellen, deren Borstenmagazin kompakter gestaltet sein kann. So kann eine Abteilvorrichtung und auch eine Bürstenstopfmaschine mit einer solchen bereitgestellt werden, die insgesamt einen geringeren Platzbedarf benötigen bzw. deren Borstenmagazine bei gleichem Platzbedarf eine größere Anzahl an Materialkanälen zur Bevorratung beispielsweise unterschiedlicher Arten von Borstenfilamenten aufweisen können.

Bei einer Ausführungsform des Verfahrens ist vorgesehen, dass die Abteilkerbe bei Ausführung der Abteilbewegung im Abteilbereich zumindest zwei, einem Stopfwerkzeug abgewandte, hintere Umkehrpunkte passiert. Diese hinteren Umkehrpunkte können an unterschiedlichen Positionen im Abteilbereich am Vorrat angeordnet sein. Durch die zumindest zwei hinteren Umkehrpunkte können Borstenfilamente an unterschiedlichen Positionen im Abteilbereich ausgefasst werden. Auch dies kann die Befüllung der Abteilkerbe mit Borstenfilamenten begünstigen.

Die Abteilbewegung der Abteilkerbe kann bei einer Ausführungsform des Verfahrens durch Überlagerung von zumindest zwei Bewegungen erzeugt werden. Diese zumindest zwei Bewegungen können beispielsweise sinusförmig sein und/oder unterschiedliche Amplituden aufweisen. Es ist auch möglich, die Abteilbewegung aus zumindest zwei nacheinander ausgeführten Bewegungen zusammenzusetzen. Auch hier können die Bewegungen beispielsweise sinusförmig sein und/oder unterschiedliche Amplituden aufweisen.

Eine erste Bewegung der zumindest zwei Bewegungen kann eine Hauptbewegung der Abteilkerbe sein, durch die die Abteilkerbe zwischen einem Stopfwerkzeug und dem Vorrat an losen Borstenfilamenten bewegt wird.

Die zweite Bewegung der zumindest zwei Bewegungen kann eine Zusatzbewegung der Abteilkerbe sein, die die Abteilkerbe, insbesondere der Bündelabteiler, an dem die Abteilkerbe angeordnet ist, innerhalb des Abteilbereichs an dem Vorrat ausführt.

Die Hauptbewegung kann von einem Antriebsmotor, insbesondere von einer Abtriebswelle des Antriebsmotors, einer Abteilvorrichtung und/oder einer Bürstenstopfmaschine verursacht werden. Die Zusatzbewegung kann von einem Aktor, beispielsweise von einem Piezo-Element, verursacht werden. Der Aktor kann beispielsweise im Kraftfluss zwischen dem Bündelabteiler, an dem die Abteilkerbe ausgebildet ist, und einem Antriebsmotor für den Bündelabteiler angeordnet sein.

Der Aktor kann bei einer Ausführungsform des Verfahrens und auch der nachfolgend noch näher beschriebenen Abteilvorrichtung zu Längenverstellung einer Antriebsstange, über die der Bündelabteiler zumindest mittelbar mit dem Antriebsmotor verbunden sein kann, eingerichtet sein.

Auf diese Weise kann die Zusatzbewegung der Abteilkerbe durch eine mit dem Aktor bewirkte Längenverstellung dieser Antriebsstange verursacht und bei Bedarf der Hauptbewegung des Bündelabteilers und seiner Abteilkerbe überlagert werden.

Bei einer Ausführungsform des Verfahrens ist vorgesehen, die Frequenz und/oder die Amplitude der Zusatzbewegung und/oder der Hauptbewegung mit einer vorzugsweise programmierbaren Steuereinheit, die zur Ansteuerung des Aktors und/oder des Antriebsmotors eingerichtet sein kann, vorzugeben. Bei Bedarf können die Frequenz und/oder die Amplitude der Zusatzbewegung und/oder der Hauptbewegung durch die Steuereinheit auch verändert werden. So ist eine einfache Anpassung des Verfahrens an ein geändertes Produktionsprogramm möglich.

Mithilfe einer Steuereinheit können Umkehrpunkte in beliebiger Anzahl und/oder Position im Abteilbereich am Vorrat loser Borstenfilamente vorgegeben und dadurch das Abteilen von Borstenbündeln aus dem Vorrat loser Borstenfilamente bedarfsgerecht angepasst werden.

Zur Lösung der Aufgabe wird auch eine Abteilvorrichtung zum Abteilen von Borstenbündeln aus einem Vorrat an losen Borstenfilamenten vorgeschlagen, die die Mittel und Merkmale des unabhängigen, auf eine derartige Abteilvorrichtung gerichteten Anspruchs aufweist. Erfindungsgemäß weist die Abteilvorrichtung einen Bündelabteiler mit zumindest einer Abteilkerbe, ein Borstenmagazin für einen Vorrat an losen Borstenfilamenten und eine Antriebsvorrichtung auf, die dazu eingerichtet ist, den Bündelabteiler mit der zumindest einen Abteilkerbe in einer Abteilbewegung so durch einen Abteilbereich am Vorrat loser Borstenfilamente zu bewegen, dass die Abteilkerbe ihre Bewegungsrichtung im Abteilbereich zumindest zweimal, vorzugsweise zumindest dreimal, ändert. Auf diese Weise wird eine Abteilvorrichtung geschaffen, die zur Durchführung des zuvor erläuterten Verfahrens und damit zum besonders zuverlässigen Abteilen von Borstenbündeln aus dem Vorrat an losen Borstenfilamenten genutzt werden kann. Die Abteilvorrichtung kann insbesondere durch die Antriebsvorrichtung zur Durchführung des Verfahrens nach einem der auf ein solches Verfahren gerichteten Ansprüche eingerichtet sein.

Die Antriebsvorrichtung kann einen Antriebsmotor und ein Getriebe umfassen. Der Antriebsmotor kann über das Getriebe mit dem Bündelabteiler verbunden sein. Das Getriebe kann dazu eingerichtet sein, eine Bewegung einer Abtriebswelle des Antriebsmotors in eine Bewegung des Bündelabteilers und seiner Abteilkerbe umzuwandeln. Der Antriebsmotor der Antriebsvorrichtung der Abteilvorrichtung kann ein Antriebsmotor einer Bürstenstopfmaschine sein, die mit der Abteilvorrichtung ausgestattet ist.

Bei einer Ausführungsform der Abteilvorrichtung ist vorgesehen, dass das Getriebe eine Steuerkurve aufweist. Die Steuerkurve kann die Abteilbewegung des Bündelabteilers und damit die Abteilbewegung der Abteilkerbe vorgeben und mit dem Antriebsmotor der Antriebsvorrichtung antriebsverbunden sein. Die Steuerkurve kann an einem Kurventräger, beispielsweise an einem sogenannten Doppelexzenter, der als Kurvenscheibe ausgebildet sein kann, angeordnet oder ausgebildet sein. Der Doppelexzenter kann Teil des Getriebes sein und zumindest mittelbar durch den Antriebsmotor der Antriebsvorrichtung angetrieben werden.

Die Steuerkurve kann so ausgebildet sein, dass eine Rotation der Steuerkurve um eine Rotationsachse über eine mechanische Verbindung, die eine Antriebsstange umfassen kann, auf den Bündelabteiler übertragen wird. Die Steuerkurve kann so ausgebildet sein, dass die Abteilkerbe bei Ausführung der Abteilbewegung im Abteilbereich am Vorrat loser Borstenfilamente ihre Bewegungsrichtung zumindest zweimal, vorzugsweise zumindest dreimal, ändert.

Die mechanische Verbindung kann ein Abgriffsglied, beispielsweise eine Rolle umfassen. Das Abgriffsglied kann mit der zuvor bereits erwähnten Antriebsstange mit dem Bündelabteiler verbunden sein. Eine Bewegung der Steuerkurve kann dann über das Abgriffsglied und die Antriebsstange auf den Bündelabteiler übertragen werden.

Bei einer Ausführungsform der Abteilvorrichtung umfasst das Getriebe der Antriebsvorrichtung einen Pleueltrieb, mit dem zumindest ein Teil der Abteilbewegung, insbesondere die zuvor erwähnte Hauptbewegung, der Abteilkerbe verursacht werden kann.

Das Getriebe kann einen Aktor aufweisen, beispielsweise ein Piezo-Element, der/das zur Verursachung einer, beispielsweise der zuvor bereits erwähnten Zusatzbewegung der Abteilkerbe eingerichtet ist. Bei dieser Ausführungsform der Abteilvorrichtung kann dann dieser Aktor zumindest einen der wenigstens zwei, vorzugsweise drei Wechsel der Bewegungsrichtung der Abteilkerbe im Abteilbereich am Vorrat loser Borstenfilamente bewirken.

Der Aktor kann zur Längenverstellung einer mit dem Bündelabteiler verbundenen Antriebsstange des Getriebes eingerichtet sein. Der Aktor kann hierbei im Kraftfluss zwischen Antriebsmotor und Bündelabteiler angeordnet sein. Der Aktor kann sowohl mit einer Steuerkurve als auch mit einem Pleueltrieb kombiniert werden.

Die Antriebsvorrichtung kann eine, vorzugsweise programmierbare, Steuereinheit aufweisen, die zur Steuerung des Antriebsmotors und/oder des Aktors eingerichtet ist. Die Steuereinheit kann derart programmiert und/oder eingerichtet, sein, dass die Abteilkerbe bei Ausführung der Abteilbewegung im Abteilbereich zumindest zweimal, vorzugsweise zumindest dreimal ihre Bewegungsrichtung ändert. Die Abteilvorrichtung kann somit durch die Steuereinheit zur Durchführung des Verfahrens zum Abteilen von Borstenbündeln nach einem der auf ein solches gerichteten Ansprüche eingerichtet sein.

Durch die Steuereinheit kann ferner beispielsweise eine Anpassung der Frequenz und/oder Amplitude der zuvor erwähnten Zusatzbewegung und/oder Hauptbewegung der Abteilkerbe vorgenommen werden. Vorzugsweise weist diese Steuereinheit eine Datenschnittstelle zur Verbindung mit einen Datenspeicher, insbesondere mit einem Cloud-basierten Datenspeicher, auf. Ferner kann die Steuereinheit programmierbar sein. So kann beispielsweise die Anzahl und/oder Position von Umkehrpunkten der Abteilbewegung im Abteilbereich am Vorrat an losen Borstenfilamenten vorgegeben werden.

Über die Datenschnittstelle können Steuerprogramme abgerufen und so die Abteilbewegung der Abteilkerbe beeinflusst werden. Insbesondere dann, wenn die Abteilvorrichtung in einem Produktionsverbund verwendet wird, ist es möglich, über diese Datenschnittstelle bei Bedarf auch Steuerprogramme und/oder Betriebsparameter im Datenspeicher zu hinterlegen und dort für andere Abteilvorrichtungen zur Verfügung zu stellen. Dies ermöglicht eine effiziente Steuerung eines Produktionsverbunds, der mehrere Abteilvorrichtungen umfasst, die gegebenenfalls sogar an unterschiedlichen Standorten verteilt betrieben werden können.

Bei einer Ausführungsform der Abteilvorrichtung ist der Bündelabteiler als Kreisbogenabteiler ausgebildet und kann um eine Schwenkachse geschwenkt werden, um die Abteilbewegung auszuführen. Bei einer anderen Ausführungsform der Abteilvorrichtung ist der Bündelabteiler als Abteilschieber ausgebildet. Der Abteilschieber kann zur Ausführung der Abteilbewegung in einer alternierenden Linearbewegung bewegt werden. Bei einer weiteren Ausführungsform der Abteilvorrichtung ist der Bündelabteiler als Abteilscheibe ausgebildet. Die Abteilscheibe kann um eine Schwenkachse geschwenkt oder rotiert werden, um die Abteilbewegung auszuführen. Insbesondere bei einem als Abteilscheibe ausgebildeten Bündelabteiler kann die zumindest eine Abteilkerbe bei Ausführung der Abteilbewegung im Abteilbereich am Vorrat loser Borstenfilamente eine geradzahlige Anzahl von Bewegungsänderungen durchführen.

Zur Lösung der Aufgabe wird auch eine Bürstenstopfmaschine mit einer Abteilvorrichtung nach einem der auf eine solche Abteilvorrichtung gerichteten Ansprüche vorgeschlagen, die ferner eine Stopfvorrichtung mit einem Stopfwerkzeug aufweist, das dazu eingerichtet ist, von der Abteilvorrichtung bereitgestellte Borstenbündel in einen Borstenträger einer Bürste einzustopfen.

Die Stopfvorrichtung und die Abteilvorrichtung können mit einem gemeinsamen Antriebsmotor angetrieben werden. Der Antriebsmotor kann dann auch als Antriebsmotor der Abteilvorrichtung bzw. als Antriebsmotor der Stopfvorrichtung bezeichnet werden.

Eine Abtriebswelle des Antriebsmotors und das Stopfwerkzeug können über einen Exzenter miteinander verbunden sein. Über den Exzenter kann eine Rotation der Abtriebswelle in eine alternierende Bewegung des Stopfwerkzeugs umgewandelt werden. Die Abtriebswelle des Antriebsmotors kann als Hauptwelle der Bürstenstopfmaschine fungieren, deren Bewegung über den Exzenter auf das Stopfwerkzeug und über das zuvor bereits erwähnte Getriebe der Abteilvorrichtung auf den Bündelabteiler und die Abteilkerbe übertragen werden kann.

Die Erfindung wird nachfolgend anhand von Ausführungsbeispielen näher beschrieben, ist aber nicht auf diese Ausführungsbeispiele beschränkt.

Es zeigen:
- Figur 1: eine perspektivische Ansicht einer Bürstenstopfmaschine mit einer Stopfvorrichtung, die ein Stopfwerkzeug aufweist, und mit einer Abteilvorrichtung, deren Bündelabteiler eine Abteilkerbe aufweist und über einen Pleueltrieb mit einem Antriebsmotor verbunden ist, der gleichzeitig auch als Antrieb des Stopfwerkzeugs dient,
- Figur 2: eine perspektivische Ansicht einer Bürstenstopfmaschine, deren Aufbau dem Aufbau der in Figur 1 gezeigten Bürstenstopfmaschine ähnelt, wobei hier im Antriebsstrang zwischen Bündelabteiler der Abteilvorrichtung und dem Antriebsmotor ein zur Längenverstellung einer Antriebsstange eingerichteter Aktor vorgesehen ist, um der Hauptbewegung des Bündelabteilers eine Zusatzbewegung zu überlagern,
- Figur 3: eine perspektivische Ansicht der in Figur 2 gezeigten Bürstenstopfmaschine, wobei hier der im Antriebsstrang zwischen Bündelabteiler und Antriebsmotor angeordnete Aktor die Antriebsstange längenverstellt hat und die am Bündelabteiler ausgebildete Abteilkerbe im Vergleich zu der in Figur 2 gezeigten Position innerhalb des Abteilbereichs am Vorrat an losen Borstenfilamenten in Richtung des Stopfwerkzeugs vorgeschoben ist,
- Figur 4: die in den Figuren 2 und 3 gezeigte Bürstenstopfmaschine mit weiter vorgeschobener Abteilkerbe,
- Figur 5: eine perspektivische Darstellung einer Bürstenstopfmaschine, deren Abteilvorrichtung anstelle eines Pleueltriebs eine Steuerkurve an einem Doppelexzenter aufweist, mit der die Bewegung des Bündelabteilers gemäß dem erfindungsgemäßen Verfahren bewirkt werden kann,
- Figur 6: die in Figur 5 gezeigte Bürstenstopfmaschine, wobei hier im Antriebsstrang zwischen Bündelabteiler und Antriebsmotor ein Aktor zur Längenverstellung der mit dem Bündelabteiler verbundenen Antriebsstange vorgesehen ist,
- Figur 7: die in Figur 6 gezeigte Bürstenstopfmaschine mit im Vergleich zu Figur 6 durch den Aktor verlängerter Antriebsstange und entsprechend verschobener Abteilkerbe,
- Figur 8: die in Figur 7 gezeigte Bürstenstopfmaschine mit im Vergleich zu Figur 7 verlängerter Antriebsstange,
- Figur 9: eine Darstellung zur Veranschaulichung der Abteilbewegung eines als Abteilschiebers ausgebildeten Bündelabteilers und seiner Abteilkerbe im Abteilbereich an einem Borstenmagazin mit einem Vorrat an losen Borstenfilamenten, wobei die Darstellungen in Spalte A eine Abteilbewegung der Abteilkerbe ohne mehrfache Richtungsänderung der Abteilkerbe und die Darstellungen in Spalte B eine Abteilbewegung der Abteilkerbe mit dreifacher Richtungsänderung der Abteilkerbe im Abteilbereich zeigen,
- Figur 10: ein Diagramm, das eine Abteilbewegung einer Abteilkerbe mit nur einem Richtungswechsel im Abteilbereich veranschaulicht und in dem auf ein Schwenkwinkel des Bündelabteilers (Y-Achse) über einen Drehwinkel einer Abtriebswelle des Antriebsmotors (X-Achse) der in den vorherigen Figuren gezeigten Bürstenstopfmaschinen aufgetragen ist, sowie
- Figur 11: ein Diagramm, das die Abteilbewegung einer mit drei Richtungswechseln im Abteilbereich an einem Vorrat an losen Borstenfilamenten veranschaulicht.

Bei der nachfolgenden Figurenbeschreibung erhalten in ihrer Funktion übereinstimmende Elemente der beschriebenen Gegenstände auch bei abweichender Gestaltung oder Formgebung übereinstimmende Bezugszeichen.

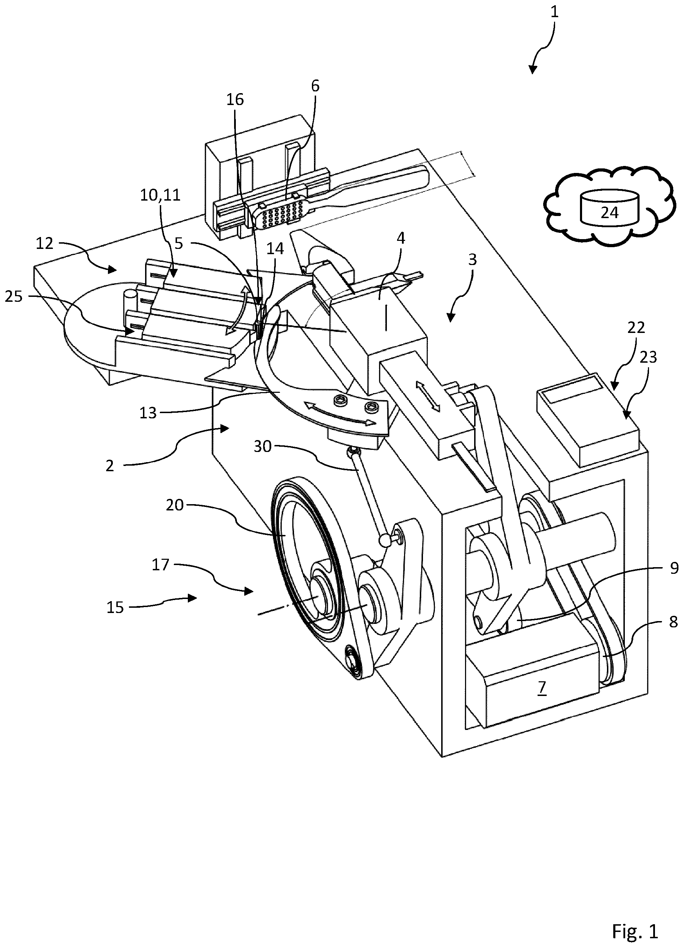

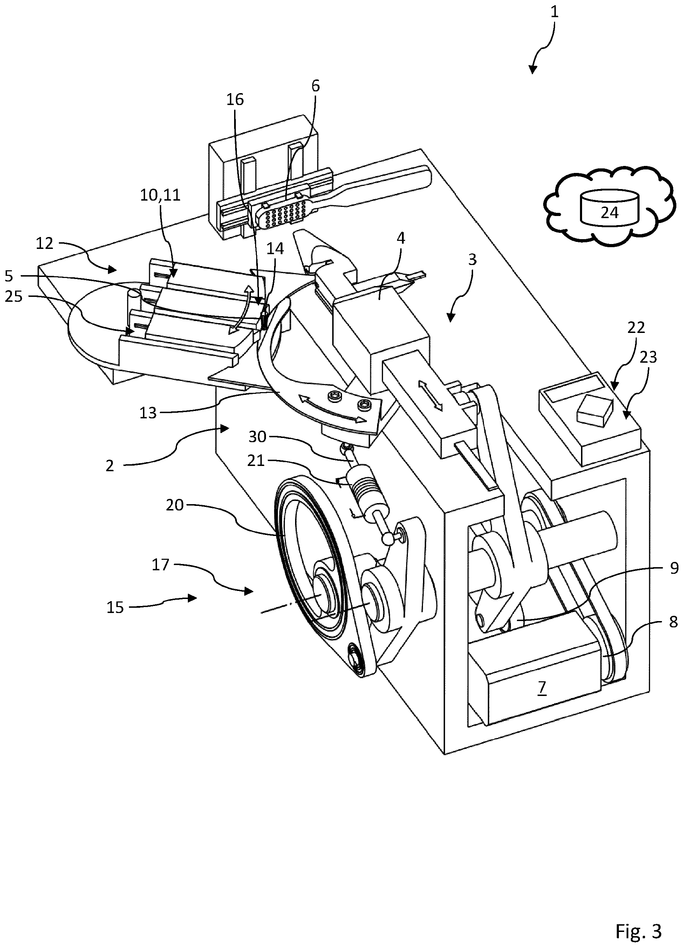

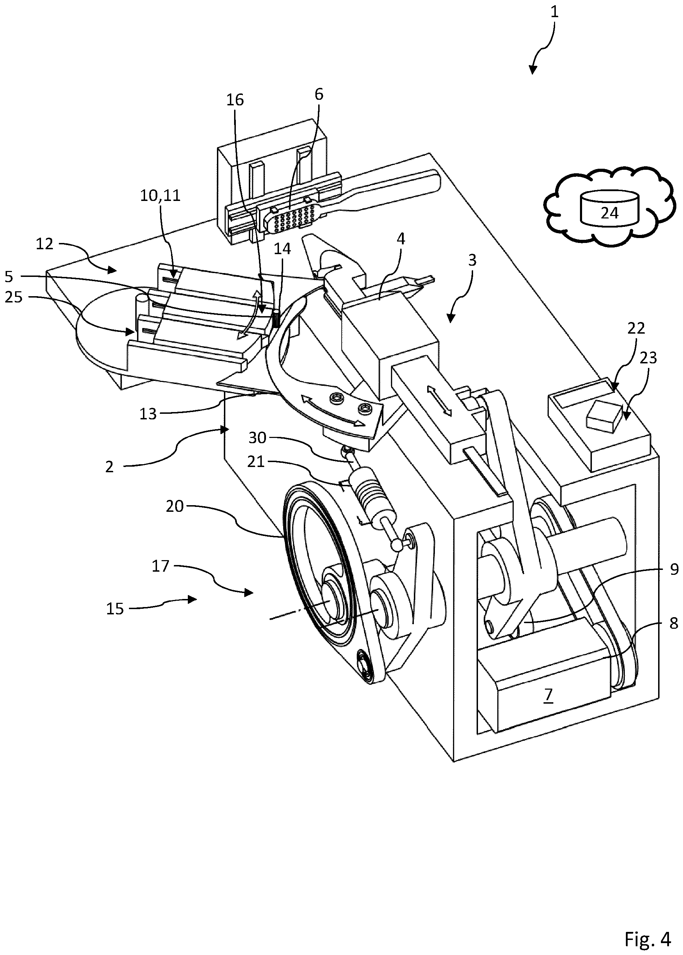

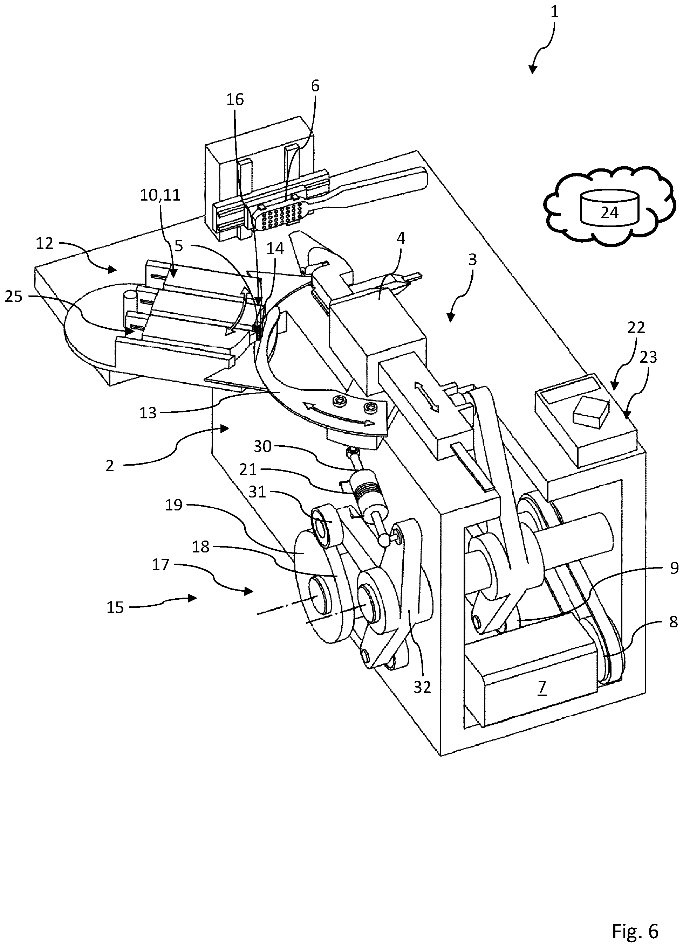

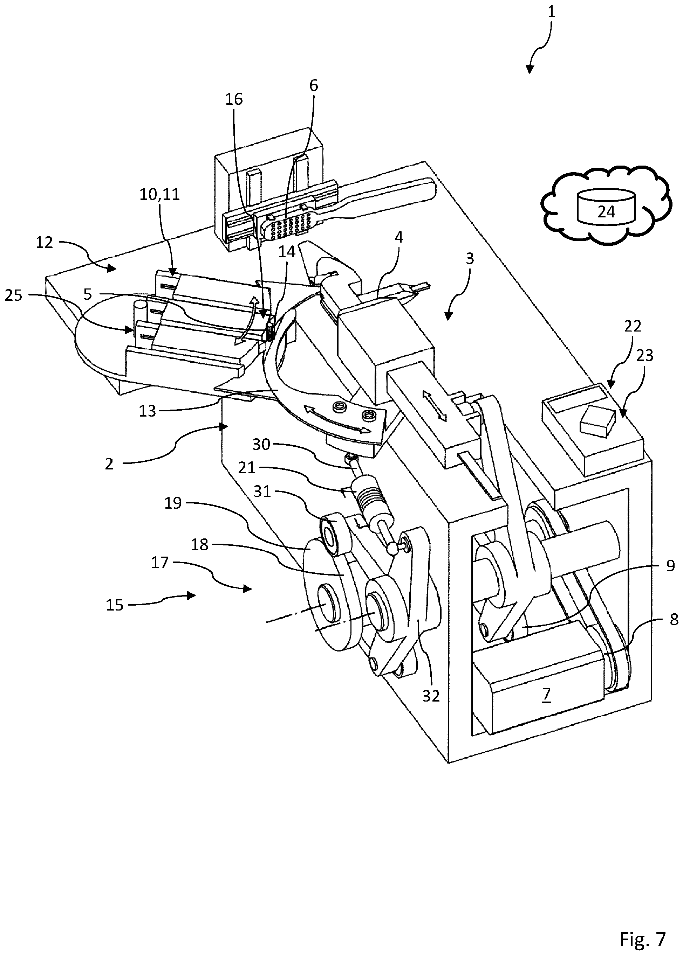

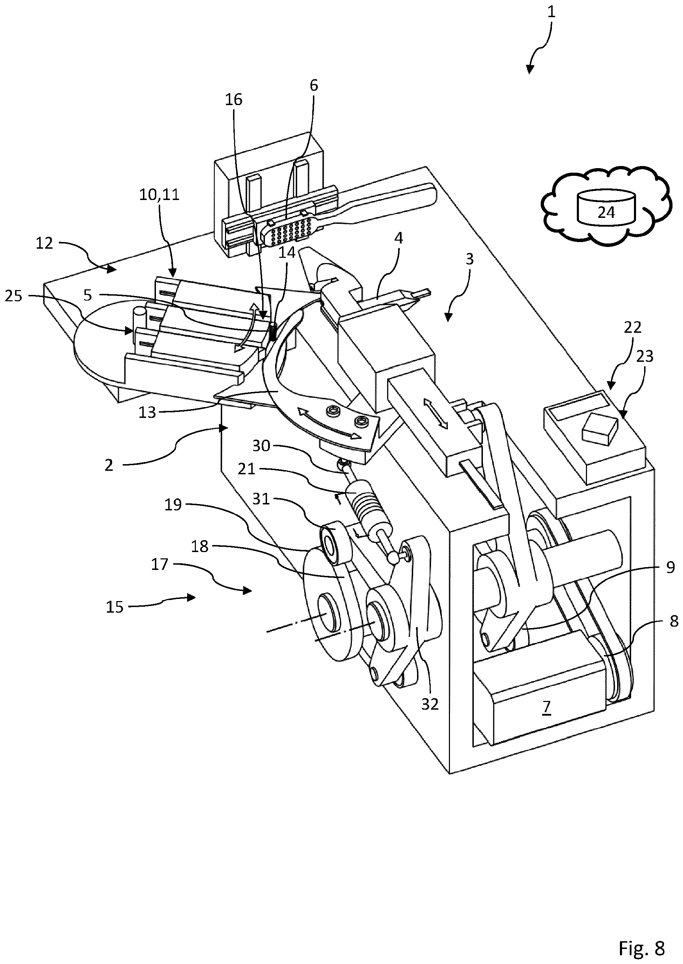

Die Figuren 1-8 zeigen unterschiedliche, jeweils im Ganzen mit 1 bezeichnete Bürstenstopfmaschinen. Jede der gezeigten Bürstenstopfmaschinen 1 weist eine Abteilvorrichtung 2 und eine Stopfvorrichtung 3 mit einem Stopfwerkzeug 4 auf, das dazu eingerichtet ist, von der Abteilvorrichtung 2 bereitgestellte Borstenbündel 5 in einen an der Bürstenstopfmaschine 1 aufgespannten Borstenträger 6 einzustopfen.

Das Stopfwerkzeug 4 und die Abteilvorrichtung 2 stehen mit einem gemeinsamen Antriebsmotor 7 der Bürstenstopfmaschine 1 in Antriebsverbindung. So können das Stopfwerkzeug 4 und die Abteilvorrichtung 2 über den gemeinsamen Antriebsmotor 7 angetrieben werden. Der Antriebsmotor 7 kann somit als Antriebsmotor der Abteilvorrichtung 2 und auch als Antriebsmotor der Stopfvorrichtung 3 und des Stopfwerkzeugs 4 bezeichnet werden.

Eine Abtriebswelle 8 des Antriebsmotors 7 ist bei allen in den Figuren gezeigten Bürstenstopfmaschinen 1 über einen Exzenter 9 mit dem jeweiligen Stopfwerkzeug 4 der Stopfvorrichtung 3 antriebsverbunden.

Die Abteilvorrichtung 2 dient zum Abteilen von Borstenbündeln 5 aus einem Vorrat 10 an losen Borstenfilamenten 11. Der Vorrat 10 an losen Borstenfilamenten 11 ist in einem Borstenmagazin 12 der jeweiligen Abteilvorrichtung 2 angeordnet. Das Borstenmagazin 12 kann auch als Materialkasten bezeichnet werden und weist drei Materialkanäle 25 auf, in denen jeweils eine Sorte an Borstenfilamenten 11 angeordnet sein kann.

Jede Abteilvorrichtung 2 weist einen Bündelabteiler 13 mit einer Abteilkerbe 14, ein Borstenmagazin 12 für den Vorrat 10 an losen Borstenfilamenten 11 und eine Antriebsvorrichtung 15 auf. Die Antriebsvorrichtung 15 ist dazu eingerichtet, den Bündelabteiler 13 mit der Abteilkerbe 14 in einer Abteilbewegung so durch einen Abteilbereich 16 an dem Vorrat 10 loser Borstenfilamente 11 vorbeizubewegen, dass die Abteilkerbe 14 in dem Abteilbereich 16 ihre Bewegungsrichtung zumindest zweimal, vorzugsweise zumindest dreimal ändert. Dies begünstigt eine zuverlässige Füllung der Abteilkerbe 4 mit losen Borstenfilamenten 11 zum Abteilen von Borstenbündeln 5 aus dem Vorrat 10.

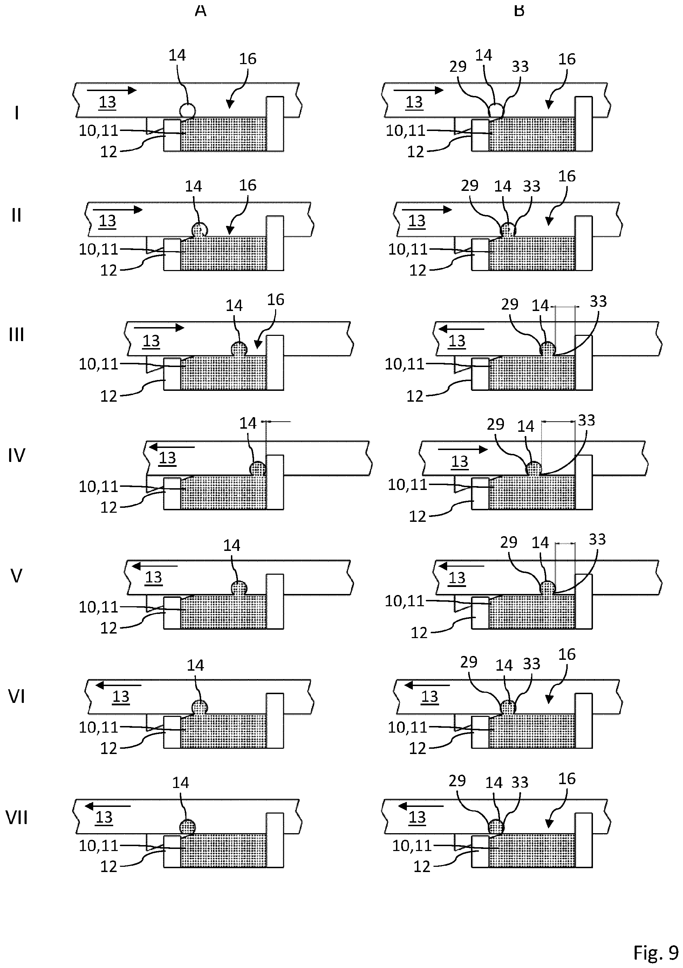

Die in den Figuren 1 bis 8 gezeigten Bündelabteiler 13 sind um eine Schwenkachse schwenkbare Kreisbogenabteiler. Die in Figur 9 gezeigten Bündelabteiler 13 sind linear verschiebbare Abteilschieber.

Die Antriebsvorrichtung 15 der Abteilvorrichtung 2 weist als Antriebsmotor den Antriebsmotor 7 der Bürstenstopfmaschine 1 und ein Getriebe 17 auf, über das der Antriebsmotor 7 mit dem Bündelabteiler 13 der Abteilvorrichtung 2 antriebsverbunden ist.

Das Getriebe 17 ist dazu eingerichtet, eine Bewegung der Abtriebswelle 8 des Antriebsmotors 7 in die zuvor erwähnte Abteilbewegung umzuwandeln. Die in den Figuren 1-8 gezeigten Abteilvorrichtungen 2 unterscheiden sich insbesondere durch die Ausführungsform ihres jeweiligen Getriebes 17.

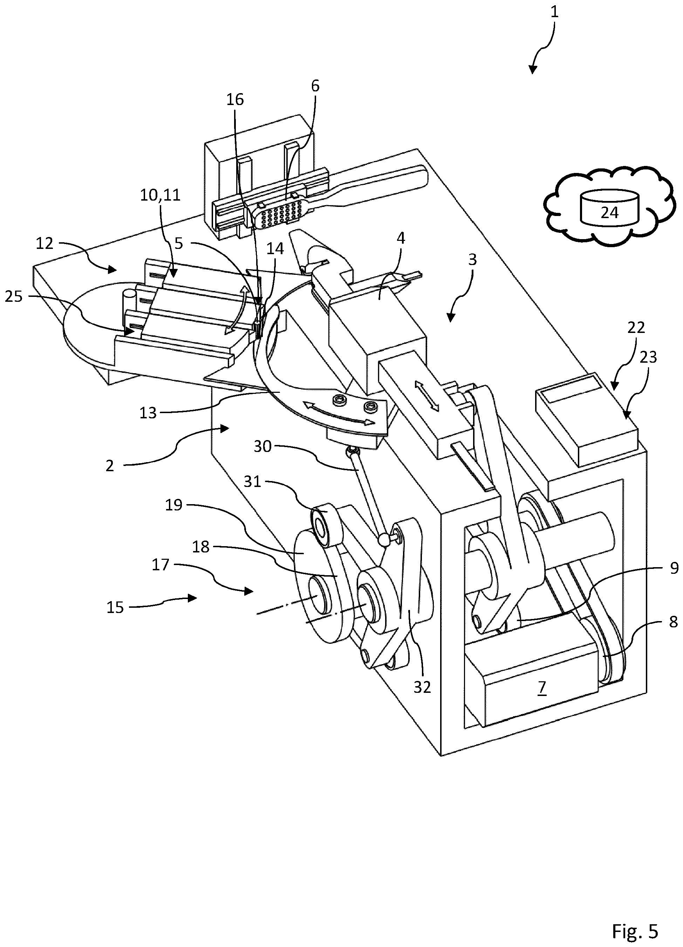

Die in den Figuren 5-8 gezeigten Abteilvorrichtungen 2 weisen ein Getriebe 17 mit einer Steuerkurve 18 auf, die an einem Doppelexzenter 19 ausgebildet ist. Der Doppelexzenter 19 dient als Kurventräger. Die Steuerkurve 18 gibt dabei die Abteilbewegung des Bündelabteilers 13 und der Abteilkerbe 14 und auch die zuvor erwähnten Richtungsänderungen der Abteilkerbe 14 im Abteilbereich vor. Der Antriebsmotor 7 ist mit dem Doppelexzenter 19 und dadurch auch mit der Steuerkurve 18 antriebsverbunden. Der Bündelabteiler 13 ist mit einer Antriebsstange 30 verbunden. Über eine Abgriffsglied 31, hier eine Rolle, und einen Übertragungshebel 32 kann die Bewegung der Steuerkurve 18 auf die Antriebsstange 30 und von dort auf den Bündelabteiler 13 übertragen werden.

Die in den Figuren 1-4 gezeigten Abteilvorrichtungen 2 weisen ein Getriebe 17 auf, das jeweils einen Pleueltrieb 20 umfasst, mit dem zumindest ein Teil der Abteilbewegung, insbesondere die zuvor bereits erwähnte Hauptbewegung des Bündelabteilers 13 und seiner Abteilkerbe 14 verursacht werden kann.

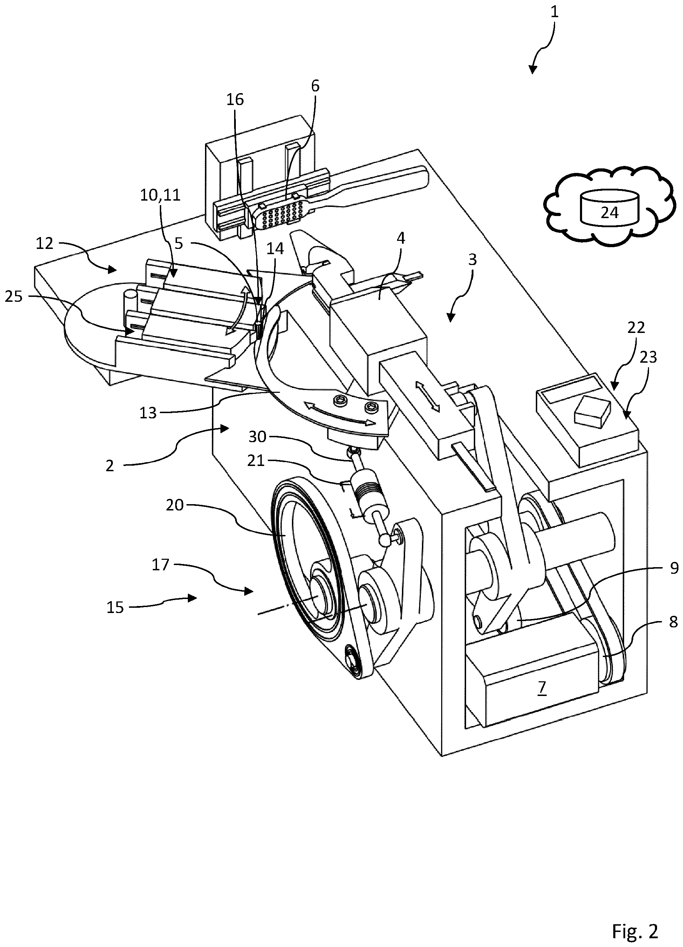

Bei den in den Figuren 2-4 und 6-8 gezeigten Abteilvorrichtung 2 weist das jeweilige Getriebe 17 außerdem einen Aktor 21, nämlich ein Piezo-Element, auf, das zur Ausführung einer Zusatzbewegung der Abteilkerbe 14 eingerichtet und vorgesehen ist. Mithilfe der Aktoren 21 kann bewirkt werden, dass die Abteilkerbe 14 am Bündelabteiler 13 im Abteilbereich 16 bei Ausführung der Abteilbewegung ihre Bewegungsrichtung ändert.

Die in den Figuren gezeigten Aktoren 21 sind jeweils zur Längenverstellung einer mit dem jeweiligen Bündelabteiler 13 verbundenen Antriebsstange 30 des Getriebes 17 eingerichtet. Die Aktoren 21 sind im Kraftfluss zwischen dem Antriebsmotor 7 und dem jeweiligen Bündelabteiler 13 angeordnet.

Die in Figur 1 und 5 jeweils gezeigten Bürstenstopfmaschinen 1 weisen jeweils eine Steuereinheit 21 auf, die zur Steuerung des jeweiligen Antriebsmotors 7 eingerichtet ist. Die Antriebsvorrichtung 15 der Abteilvorrichtungen 2 gemäß den Figuren 2-4 sowie 6-8 sind mit einer Steuereinheit 22 ausgestattet, die zur Steuerung des Antriebsmotors 7 und des jeweiligen Aktors 21 eingerichtet ist.

Jede der in den Figuren gezeigten Steuereinheiten 22 verfügt über eine Datenschnittstelle 23 zur Verbindung mit einem Datenspeicher 24, insbesondere mit einem Cloud-basierten Datenspeicher.

Über die Datenschnittstellen 23 können Steuerprogramme und/oder Betriebsparameter zum Betrieb der Abteilvorrichtung 2, der Stopfvorrichtung 3 und insgesamt der Bürstenstopfmaschine 1 aus dem Datenspeicher 24 abgerufen bzw. in diesem für andere Bürstenstopfmaschinen 1, Abteilvorrichtungen 2 bzw. Stopfvorrichtungen 3 und ihre Steuereinheiten 22 hinterlegt werden. Die Datenschnittstelle 23 der jeweiligen Steuereinheit 22 ist somit als bidirektionale Datenschnittstelle 23 ausgebildet.

Jede in den Figuren gezeigte Abteilvorrichtung 2 ist zur Durchführung des nachfolgenden Verfahrens zum Abteilen von Borstenbündeln 5 aus einem Vorrat 10 an losen Borstenfilamenten 11 eingerichtet.

Dabei wird ein Bündelabteiler 13 mit seiner Abteilkerbe 14 in einer Abteilbewegung an dem Vorrat 10 an losen Borstenfilamenten 11 vorbeibewegt. Dabei wird ein Borstenbündel 5 aus dem Vorrat 10 abgeteilt, wodurch das Borstenbündel 5, das aus einer Anzahl von losen Borstenfilamenten 11 besteht, in die Abteilkerbe 14 gelangt.

Die Abteilkerbe 14 wird bei Ausführung der Abteilbewegung in dem Abteilbereich 16 am Vorrat 10 so bewegt, dass sie im Abteilbereich 16 zumindest zweimal, vorzugsweise zumindest dreimal ihre Bewegungsrichtung ändert.

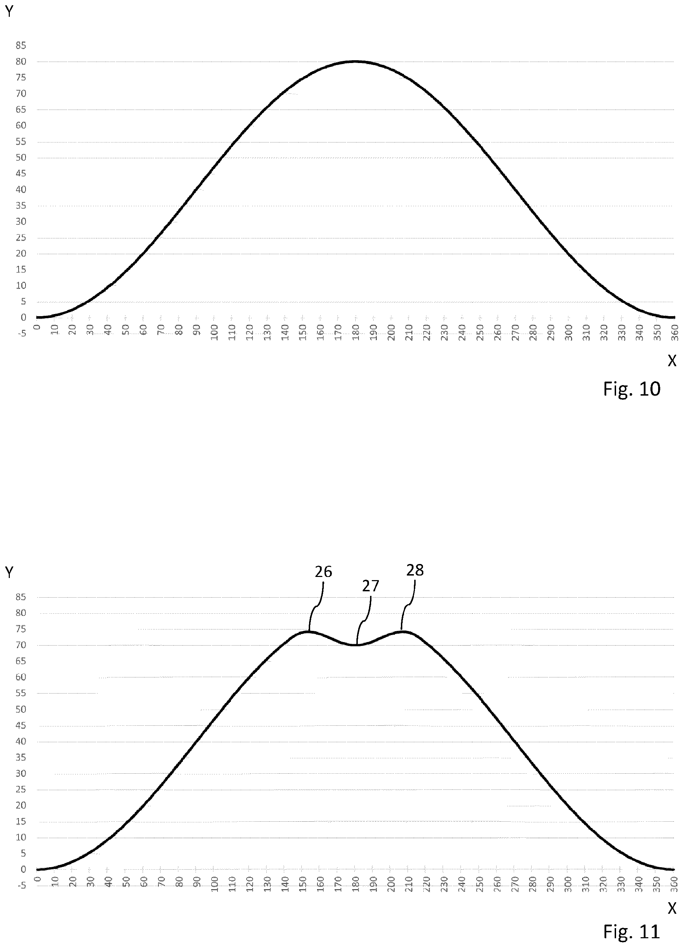

Figur 11 zeigt ein Diagramm, in dem die Winkelstellung des Bündelabteilers 13 und damit die Position der Abteilkerbe 14 relativ zum Vorrat 10 an losen Borstenfilamenten 11 über einen Drehwinkel der Abtriebswelle 8 des Antriebsmotors 7 aufgetragen ist. Ein Vergleich mit dem Diagramm aus Figur 10 macht deutlich, dass die Abteilkerbe 14 bei Ausführung der Abteilbewegung gemäß der Kurve aus Figur 11 im Abteilbereich 16 am Vorrat 10 ihre Bewegungsrichtung dreimal ändert. Eine vergleichbare Abteilbewegung veranschaulichen auch die Darstellungen in Spalte B aus Figur 9.

Anhand der Kurve aus Figur 11 sind auch Umkehrpunkte 26,27,28 der Abteilkerbe 14 im Abteilbereich 16 am Vorrat 10 zu erkennen. Die beiden Maxima der Kurve 11 verdeutlichen hintere Umkehrpunkte 26 und 28 der Abteilkerbe 14 im Abteilbereich 16, die bereits bei einer Winkelstellung des Bündelabteilers 13 von etwas weniger als 75° erreicht werden. Das Minimum der Kurve zwischen den Umkehrpunkten 26 und 28 repräsentiert einen vorderen Umkehrpunkt 27, der von der Abteilkerbe 14 bei Ausführung der Abteilbewegung passiert wird.

Im Vergleich dazu zeigt Figur 10, dass die gemäß der Kurve aus Figur 10 durchgeführte Abteilbewegung des Bündelabteilers 13 die Abteilkerbe 14 in nur einen hinteren Umkehrpunkt führt, der dafür allerdings erst dann erreicht wird, wenn der Bündelabteiler 13 bereits um 80° geschwenkt wurde.

Figur 11 zeigt damit, dass das erfindungsgemäße Verfahren und die damit verbundene Abteilbewegung des Bündelabteilers 13 eine Verkleinerung des Abteilbereichs 16 am Vorrat 10 an losen Borstenfilamenten 11 ermöglicht, in dem das Abteilen von Borstenbündeln 5 erfolgt, ohne die Dauer, in der sich die Abteilkerbe 14 im Abteilbereich 16 aufhält, zu reduzieren. So können kompaktere Borstenmagazine 12 oder aber Borstenmagazine 12 verwendet werden, die eine größere Anzahl dann entsprechend schmalerer Materialkanäle 25 aufweisen.

Die Abteilkerben 14 können bei Ausführung der Abteilbewegung bei allen in den Figuren gezeigten Abteilvorrichtungen 2 zumindest zwei, drei oder gegebenenfalls auch mehrere Umkehrpunkte 26, 27 und 28 passieren. Gemäß den Darstellungen in Spalte B der Figur 9 und auch gemäß Figur 11 passieren die Abteilkerben 14 bei dem auf den Abteilvorrichtungen 2 durchgeführten Verfahren insgesamt 3 Umkehrpunkte 26, 27 und 28, die jeweils im Abteilbereich 16 am Vorrat 10 loser Borstenfilamente 11 und gegebenenfalls an unterschiedlichen Positionen angeordnet sind. Die Abteilbewegung, die die Abteilkerbe 14 dann ausführt, hat einen sinusartigen Verlauf und kann als Überlagerung von zwei jeweils sinusförmigen Bewegungen verstanden werden.

Figur 11 zeigt, dass die Abteilkerbe 14 bei Ausführung der Abteilbewegung zwei dem Stopfwerkzeug 4 der jeweiligen Stopfvorrichtung 3 jeweils abgewandte, hintere Umkehrpunkte 26 und 28 passiert, die an unterschiedlichen Positionen im Abteilbereich 16 am Vorrat 10 angeordnet sein können. Die in Figur 11 veranschaulichte Abteilbewegung der Abteilkerbe 14 kann durch Überlagerung von zumindest zwei Bewegungen, die jeweils sinusförmig sein und/oder unterschiedliche Amplituden aufweisen können, erzeugt werden. Es ist auch möglich, die Abteilbewegung der Abteilkerbe 14 aus zumindest zwei nacheinander ausgeführten, beispielsweise sinusförmigen und/oder unterschiedliche Amplituden aufweisenden Bewegungen zusammenzusetzen.

Eine erste Bewegung der zumindest zwei Bewegungen kann dabei eine Hauptbewegung der Abteilkerbe 14 sein, durch die die Abteilkerbe 14 zwischen dem zuvor bereits erwähnten Stopfwerkzeug 4 der jeweiligen Bürstenstopfmaschine 1 und dem Vorrat 10 an losen Borstenfilamenten 11, der im Borstenmagazin 12 der jeweiligen Abteilvorrichtung 2 angeordnet ist, bewegt wird. Durch die Hauptbewegung kann die Abteilkerbe 14 in den Abteilbereich 16 bewegt und auch wieder aus dem Abteilbereich 16 entfernt werden.

Eine zweite Bewegung der zumindest zwei Bewegungen kann eine Zusatzbewegung der Abteilkerbe 14 sein, die die Abteilkerbe 14 innerhalb des Abteilbereichs 16 an dem Vorrat 10 und damit an dem Borstenmagazin 12 ausführt. Die Hauptbewegung der Abteilkerbe 14 kann mit dem zuvor bereits erwähnten Antriebsmotor 7 und insbesondere durch eine Rotation seiner Abtriebswelle 8 verursacht werden.

Die Zusatzbewegung der Abteilkerbe 14 kann mit dem zuvor bereits erwähnten Aktor 21 oder gegebenenfalls auch mit dem Antriebsmotor 7 verursacht werden.

Die Frequenz und/oder die Amplitude der Zusatzbewegung und/oder der Hauptbewegung kann hierbei mit einer vorzugsweise programmierbaren Steuereinheit 22 vorgegeben werden, wie sie die in den Figuren gezeigten Bürstenstopfmaschinen 1 für die Abteilvorrichtungen 2, die Stopfvorrichtungen 3 und die Ansteuerung des Antriebsmotors 7 jeweils aufweisen. Über die zuvor bereits erwähnte Datenschnittstelle 23 sind die in den Figuren gezeigten Bürstenstopfmaschinen 1 dazu eingerichtet, Steuerprogramme und/oder Betriebs- und Produktionsparameter zur Ansteuerung der einzelnen Funktionseinheiten der Bürstenstopfmaschine 1, also der Abteilvorrichtung 2 und der Stopfvorrichtung 3 abzurufen. Über die Datenschnittstellen 23 können auch Steuerprogramme, Betriebs- und Produktionsparameter für andere, in einem gemeinsamen Produktionsverbund betriebene Bürstenstopfmaschinen 1 und ihre Abteilvorrichtungen 2 und Stopfwerkzeuge 3 in dem Datenspeicher 24 hinterlegt werden.

Die Darstellung aus Figur 9 zeigt einen Bündelabteiler 13, der als linear beweglicher Abteilschieber ausgebildet ist und eine Abteilkerbe 14 aufweist. Die in Figur 9 dem Bezugszeichen 13 des Bündelabteilers jeweils zugeordneten Pfeile veranschaulichen die Bewegungsrichtung des Bündelabteilers 13 in den einzelnen Phasen der Abteilbewegung, die in den Zeilen I bis VII der Figur 9 dargestellt sind.

Die Darstellungen aus Spalte A in Figur 9 veranschaulichen eine Abteilbewegung, bei der der Bündelabteiler 13 und seine Abteilkerbe 14 im Abteilbereich 16 lediglich einmal seine Bewegungsrichtung ändert.

Gemäß Spalte A, Zeile I tritt die Abteilkerbe 14 in den Abteilbereich 16 am Borstenmagazin 12 mit dem Vorrat 10 an losen Borstenfilamenten 11 ein. Gemäß Spalte A, Zeile II wird die Bewegung des Bündelabteilers 13 und damit die Bewegung der Abteilkerbe 14 durch den Abteilbereich 16 fortgesetzt, bis die Abteilkerbe 14 über die in Spalte A, Zeile III veranschaulichte Zwischenposition ihren einzigen, in Spalte A, Zeile IV gezeigten hinteren Umkehrpunkt erreicht hat.

Ausgehend von der Position in Spalte A, Zeile IV wird die Abteilkerbe 14 dann wieder über die in Spalte A, Zeilen VI und VII gezeigte Positionen aus dem Abteilbereich 16 an dem Vorrat 10 bewegt.

Die Darstellungen aus Spalte B in Figur 9 zeigen eine Abteilbewegung der Abteilkerbe 14 bei der die Abteilkerbe 14 im Abteilbereich 16 dreimal ihre Bewegungsrichtung ändert.

Gemäß Spalte B, Zeile I tritt auch hier die Abteilkerbe 14 in den Abteilbereich 16 am Borstenmagazin 12 ein. Spalte B, Zeile II zeigt, dass lose Borstenfilamente 11 über eine in Bewegungsrichtung der Abteilkerbe 14 durch den Abteilbereich 16 hintere Kante 29 der Abteilkerbe 14 in die Abteilkerbe 14 gelangen. Wird die Bewegungsrichtung der Abteilkerbe 14 umgekehrt, erfolgt die Befüllung der Abteilkerbe 14 über eine der ersten Kante 29 entgegengesetzte, zweite Kante 33 der Abteilkerbe 14.

Gemäß Spalte B, Zeile III hat die Abteilkerbe 14 ihren ersten, hinteren Umkehrpunkt 26 erreicht. Ausgehend von diesem ersten hinteren Umkehrpunkt 26 wird die Abteilbewegung der Abteilkerbe 14 in entgegengesetzter Richtung fortgesetzt, wodurch die Abteilkerbe 14 in die in Spalte B, Zeile IV gezeigte Position gelangt, in der die Abteilkerbe 14 ihren vorderen Umkehrpunkt 27 im Abteilbereich 16 erreicht hat.

Aus diesem vorderen Umkehrpunkt 27 wird die Abteilkerbe 14 dann in den zweiten, hinteren Umkehrpunkt 28 bewegt. Den hinteren Umkehrpunkt 28 hat die Abteilkerbe 14 dann in der Darstellung gemäß Spalte B, Zeile V erreicht.

Aus diesem hinteren Umkehrpunkt 28 wird die Abteilkerbe 14 dann über die in Figur 9, Spalte B, Zeilen VI und VII gezeigten Positionen aus dem Abteilbereich 16 am Vorrat 10 an losen Borstenfilamenten 11 herausbewegt.

In Spalte B, Zeile III von Figur 9 ist der erste und damit auch hinterste Umkehrpunkt 26 der beiden hinteren Umkehrpunkte 26 und 28 gezeigt, die die Abteilkerbe 14 bei Durchführung des Verfahrens passiert.

Im Vergleich dazu zeigt Figur 9, Spalte A, Zeile IV, dass die Abteilkerbe 14 in dem dort wiedergegebenen hinteren Umkehrpunkt deutlich weiterbewegt wurde.

Ein Vergleich der Darstellung aus Spalte A, Zeile III der Figur 9 mit der Darstellung aus Spalte B, Zeile IV der Figur 9 macht also deutlich, dass das vorgeschlagene Verfahren, bei dem die Abteilkerbe 14 ihre Bewegungsrichtung im Abteilbereich 16 zumindest zweimal, vorzugsweise zumindest dreimal ändert, eine Verringerung der Breite des Abteilbereichs 16 ermöglicht.

### Bezugszeichenliste

- 1: Bürstenstopfmaschine
- 2: Abteilvorrichtung
- 3: Stopfvorrichtung
- 4: Stopfwerkzeug
- 5: Borstenbündel
- 6: Borstenträger
- 7: Antriebsmotor
- 8: Abtriebswelle
- 9: Exzenter zwischen 8 und 7
- 10: Vorrat
- 11: Borstenfilamente
- 12: Borstenmagazin
- 13: Bündelabteiler
- 14: Abteilkerbe
- 15: Antriebsvorrichtung
- 16: Abteilbereich
- 17: Getriebe
- 18: Steuerkurve
- 19: Doppelexzenter
- 20: Pleueltrieb
- 21: Aktor
- 22: Steuereinheit
- 23: Datenschnittstelle
- 24: Datenspeicher
- 25: Materialkanal
- 26: erster hinterer Umkehrpunkt
- 27: vorderer Umkehrpunkt
- 28: zweiter hinterer Umkehrpunkt
- 29: erste Kante von 14
- 30: Antriebsstange
- 31: Abgriffsglied, Rolle
- 32: Übertragungshebel
- 33: zweite Kante von 14

## Patentansprüche

1. Verfahren zum Abteilen von Borstenbündeln (5) aus einem Vorrat (10) an losen Borstenfilamenten (11), wobei ein Bündelabteiler (13) mit einer Abteilkerbe (14) in einer Abteilbewegung an dem Vorrat (10) an losen Borstenfilamenten (11) vorbeibewegt wird, dabei ein Borstenbündel (5) aus dem Vorrat (10) abgeteilt wird und in die Abteilkerbe (14) gelangt, **dadurch gekennzeichnet, dass** die Abteilkerbe (14) bei Ausführung der Abteilbewegung ihre Bewegungsrichtung in einem Abteilbereich (16) am Vorrat (10) zumindest zweimal, vorzugsweise zumindest dreimal, ändert.

2. Verfahren nach dem vorherigen Anspruch, wobei die Abteilkerbe (14) bei Ausführung der Abteilbewegung zumindest zwei, vorzugsweise zumindest drei, Umkehrpunkte (26,27,28) passiert, die in dem Abteilbereich (16) am Vorrat (10) loser Borstenfilamente (11), vorzugsweise an unterschiedlichen Positionen, angeordnet sind, und/oder wobei die Abteilbewegung einen sinusartigen Verlauf aufweist.

3. Verfahren nach einem der beiden vorherigen Ansprüche, wobei die Abteilkerbe (14) bei Ausführung der Abteilbewegung zumindest zwei, einem Stopfwerkzeug (4) abgewandte, hintere Umkehrpunkte (26, 28) passiert, die an unterschiedlichen Positionen im Abteilbereich (16) am Vorrat (10) angeordnet sind.

4. Verfahren nach einem der vorherigen Ansprüche, wobei die Abteilbewegung durch Überlagerung von zumindest zwei Bewegungen, insbesondere die sinusförmig sind und/oder unterschiedliche Amplituden aufweisen, erzeugt wird, oder wobei die Abteilbewegung aus zumindest zwei nacheinander ausgeführten, vorzugsweise sinusförmigen und/oder unterschiedliche Amplituden aufweisenden, Bewegungen zusammengesetzt wird.

5. Verfahren nach dem vorherigen Anspruch, wobei eine erste Bewegung der zumindest zwei Bewegungen eine Hauptbewegung der Abteilkerbe (14) ist, durch die die Abteilkerbe (14) zwischen einem Stopfwerkzeug (4) und dem Vorrat (10) an losen Borstenfilamenten (11) bewegt wird, und/oder wobei eine zweite Bewegung der zumindest zwei Bewegungen eine Zusatzbewegung der Abteilkerbe (14) ist, die die Abteilkerbe (14) innerhalb des Abteilbereichs (16) an dem Vorrat (10) ausführt.

6. Verfahren nach dem vorherigen Anspruch, wobei die Hauptbewegung von einem Antriebsmotor (7), insbesondere von einer Abtriebswelle (8), einer Abteilvorrichtung (2) verursacht wird, und/oder wobei die Zusatzbewegung von einem Aktor (21), insbesondere von einem Piezo-Element, verursacht wird, vorzugsweise der/das im Kraftfluss zwischen dem Bündelabteiler (13), an dem die Abteilkerbe (14) ausgebildet ist, und einem Antriebsmotor (7) für den Bündelabteiler (13) angeordnet ist.

7. Verfahren nach einem der vorherigen Ansprüche, wobei die Frequenz und/oder die Amplitude der Zusatzbewegung und/oder der Hauptbewegung mit einer, vorzugsweise programmierbaren Steuereinheit (22) vorgegeben wird.

8. Abteilvorrichtung (2) zum Abteilen von Borstenbündeln (5) aus einem Vorrat (10) an losen Borstenfilamenten (11), wobei die Abteilvorrichtung (2) einen Bündelabteiler (13) mit zumindest einer Abteilkerbe (14), und ein Borstenmagazin (12) für einen Vorrat (10) an losen Borstenfilamenten (11) umfasst, **dadurch gekennzeichnet, dass** die Abteilvorrichtung (2) eine Antriebsvorrichtung (15) umfasst, die dazu eingerichtet ist, den Bündelabteiler (13) mit der zumindest einen Abteilkerbe (14) in einer Abteilbewegung so durch einen Abteilbereich (16) an dem Vorrat (10) loser Borstenfilamente (11) vorbeizubewegen, dass die Abteilkerbe (14) ihre Bewegungsrichtung in dem Abteilbereich (16) am Vorrat (10) zumindest zweimal, vorzugsweise zumindest dreimal ändert.

9. Abteilvorrichtung (2) nach dem vorherigen Anspruch, wobei die Abteilvorrichtung (2) durch die Antriebsvorrichtung (15) zur Durchführung des Verfahren nach einem der Ansprüche 1 bis 7 eingerichtet ist.

10. Abteilvorrichtung (2) nach einem der Ansprüche 8 oder 9, wobei die Antriebsvorrichtung (15) einen Antriebsmotor (7) und ein Getriebe (17) umfasst, wobei der Antriebsmotor (7) über das Getriebe (17) mit dem Bündelabteiler (13) verbunden und das Getriebe (17) dazu eingerichtet ist, eine Bewegung einer Abtriebswelle (8) des Antriebsmotors (7) in eine Bewegung des Bündelabteilers (13) umzuwandeln.

11. Abteilvorrichtung (2) nach Anspruch 10, wobei das Getriebe (17) eine Steuerkurve (18), insbesondere die an einem Doppelexzenter (19) ausgebildet ist, umfasst, die/der die Abteilbewegung vorgibt und/oder mit dem Antriebsmotor (7) antriebsverbunden ist.

12. Abteilvorrichtung (2) nach einem der Ansprüche 10 oder 11, wobei das Getriebe (17) einen Pleueltrieb (20) umfasst, mit dem zumindest ein Teil der Abteilbewegung, insbesondere die Hauptbewegung, der Abteilkerbe (14) verursacht werden kann.

13. Abteilvorrichtung (2) nach einem der Ansprüche 10 bis 12, wobei das Getriebe (17) einen Aktor (21), insbesondere ein Piezo-Element, umfasst, das zur Ausführung einer oder der Zusatzbewegung der Abteilkerbe (14) eingerichtet ist.

14. Abteilvorrichtung (2) nach Anspruch 13, wobei der Aktor (21) zur Längenverstellung eines mit dem Bündelabteiler (13) verbundenen Antriebsstange (30) des Getriebes (17) eingerichtet ist, und/oder wobei der Aktor (21) im Kraftfluss zwischen Antriebsmotor (7) und Bündelabteiler (13) angeordnet ist.

15. Abteilvorrichtung (2) nach einem der Ansprüche 10 bis 14, wobei die Antriebsvorrichtung (15) eine Steuereinheit (22) aufweist, die zur Steuerung des Antriebsmotors (7) und/oder des Aktors (21) eingerichtet ist, vorzugsweise wobei die Steuereinheit (22) eine Datenschnittstelle (23) zur Verbindung mit einem Datenspeicher (24), insbesondere mit einem Cloud-basierten Datenspeicher, aufweist.

16. Bürstenstopfmaschine (1) mit einer Abteilvorrichtung (2) nach einem der Ansprüche 8 bis 15 und mit einer Stopfvorrichtung (3) mit einem Stopfwerkzeug (4), das dazu eingerichtet ist, von der Abteilvorrichtung (2) bereitgestellte Borstenbündel (5) in einen Borstenträger (6) einzustopfen.

17. Bürstenstopfmaschine (1) nach Anspruch 16, wobei die Stopfvorrichtung (3) und die Abteilvorrichtung (2) mit einem gemeinsamen Antriebsmotor (7) antreibbar sind.

18. Bürstenstopfmaschine (1) nach Anspruch 17, wobei eine Abtriebswelle (8) des Antriebsmotors (7) und das Stopfwerkzeug (4) über einen Exzenter (9) verbunden sind.

## Claims

1. Method for picking bristle bundles (5) from a supply (10) of loose bristle filaments (11), wherein a bundle picker (13) having a picking notch (14) is moved in a picking movement past the supply (10) of loose bristle bundles (11), in the process a bristle bundle (5) being separated from the supply (10) and making its way into the picking notch (14), **characterized in that,** when the picking movement is carried out, the picking notch (14) changes its direction of movement in a picking region (16) on the supply (10) at least twice, preferably at least thrice.

2. Method according to the preceding claim, wherein, when the picking movement is carried out, the picking notch (14) passes at least two, preferably at least three, reversal points (26, 27, 28) which are arranged in the picking region (16) on the supply (10) of loose bristle filaments (11), preferably at different positions, and/or wherein the picking movement has a sinusoidal profile.

3. Method according to one of the two preceding claims, wherein, when the picking movement is carried out, the picking notch (14) passes at least two rear reversal points (26, 28) which face away from a tufting tool (4) and are disposed at different positions in the picking region (16) on the supply (10).

4. Method according to one of the preceding claims, wherein the picking movement is generated by superimposing at least two movements, which are in particular sinusoidal and/or have different amplitudes, or wherein the picking movement is composed of at least two movements which are carried out successively and are preferably sinusoidal and/or have different amplitudes.

5. Method according to the preceding claim, wherein a first movement of the at least two movements is a main movement of the picking notch (14), by way of which the picking notch (14) is moved between a tufting tool (4) and the supply (10) of loose bristle filaments (11), and/or wherein a second movement of the at least two movements is an additional movement of the picking notch (14), which the picking notch (14) carries out within the picking region (16) on the supply (10).

6. Method according to the preceding claim, wherein the main movement is caused by a drive motor (7), in particular by an output shaft (8), of a picking device (2), and/or wherein the additional movement is caused by an actuator (21), in particular by a piezo element, which is preferably disposed in the force flux between the bundle picker (13), on which the picking notch (14) is formed, and a drive motor (7) for the bundle picker (13).

7. Method according to one of the preceding claims, wherein the frequency and/or the amplitude of the additional movement and/or of the main movement is predefined by a preferably programmable controller (22).

8. Picking device (2) for picking bristle bundles (5) from a supply (10) of loose bristle filaments (11), wherein the picking device (2) comprises a bundle picker (13) having at least one picking notch (14), and a bristle magazine (12) for a supply (10) of loose bristle filaments (11), **characterized in that** the picking device (2) comprises a drive device (15) which is adapted to move the bundle picker (13) having the at least one picking notch (14) in a picking movement through a picking region (16) past the supply (10) of loose bristle filaments (11) in such a way that the picking notch (14) changes its direction of movement in the picking region (16) on the supply (10) at least twice, preferably at least thrice.

9. Picking device (2) according to the preceding claim, wherein the picking device (2) is adapted to carry out, by way of the drive device (15), the method according to one of claims 1 to 7.

10. Picking device (2) according to one of claims 8 or 9, wherein the drive device (15) comprises a drive motor (7) and a gearbox (17), wherein the drive motor (7) is connected to the bundle picker (13) by way of the gearbox (17), and the gearbox (17) is adapted to convert a movement of an output shaft (8) of the drive motor (7) into a movement of the bundle picker (13).

11. Picking device (2) according to claim 10, wherein the gearbox (17) comprises a control curve (18) which is in particular formed on a double eccentric (19) and predefines the picking movement and/or is operatively connected for driving purposes to the drive motor (7).

12. Picking device (2) according to one of claims 10 or 11, wherein the gearbox (17) comprises a con-rod mechanism (20) by way of which at least part of the picking movement, in particular the main movement, of the picking notch (14) can be caused.

13. Picking device (2) according to one of claims 10 to 12, wherein the gearbox (17) comprises an actuator (21), in particular a piezo element, which is adapted to carry out a, or the, additional movement of the picking notch (14).

14. Picking device (2) according to claim 13, wherein the actuator (21) is adapted to adjust the length of a drive linkage (30) of the gearbox (17) that is connected to the bundle picker (13), and/or wherein the actuator (21) is disposed in the force flux between the drive motor (7) and the bundle picker (13).

15. Picking device (2) according to one of claims 10 to 14, wherein the drive device (15) has a controller (22) which is adapted to control the drive motor (7) and/or the actuator (21), preferably wherein the controller (22) has a data interface (23) for connecting to a data storage (24), in particular to a cloud-based data storage.

16. Brush-tufting machine (1) having a picking device (2) according to one of claims 8 to 15, and having a tufting device (3) with a tufting tool (4) which is adapted to tuft bristle bundles (5) provided by the picking device (2) into a bristle carrier (6).

17. Brush-tufting machine (1) according to claim 16, wherein the tufting device (3) and the picking device (2) are able to be driven by a common drive motor (7).

18. Brush-tufting machine (1) according to claim 17, wherein an output shaft (8) of the drive motor (7) and the tufting tool (4) are connected by way of an eccentric (9).

## Revendications

1. Procédé de segmentation de faisceaux de poils de brosse (5) à partir d'une réserve (10) de filaments de poils de brosse en vrac (11), dans lequel un diviseur de faisceaux (13) muni d'une encoche de segmentation (14) est déplacé dans un mouvement de segmentation devant la réserve (10) de filaments de poils de brosse en vrac (11), un faisceau de poils de brosse (5) est ainsi séparé de la réserve (10) et parvient dans l'encoche de segmentation (14), **caractérisé en ce que** l'encoche de segmentation (14) change de direction au moins deux fois, de préférence trois fois, en exécutant le mouvement de segmentation dans une zone de segmentation (16) de la réserve (10).

2. Procédé selon la revendication précédente, dans lequel l'encoche de segmentation (14) passe, en effectuant le mouvement de segmentation, par au moins deux, de préférence au moins trois points d'inversion (26, 27, 28) qui sont disposés dans la zone de segmentation (16) de la réserve (10) de filaments de poils de brosse en vrac (11), de préférence dans des positions différentes, et/ou dans lequel le mouvement de segmentation suit un trajet sinusoïdal.

3. Procédé selon l'une des deux revendications précédentes, dans lequel l'encoche de segmentation (14) passe, en effectuant le mouvement de segmentation, par au moins deux points d'inversion postérieurs (26, 28) orientés à l'opposé d'un outil de garnissage (4), qui sont disposés dans des positions différentes dans la zone de segmentation (16) de la réserve (10).

4. Procédé selon l'une des revendications précédentes, dans lequel le mouvement de segmentation est produit par la superposition d'au moins deux mouvements, qui sont en particulier sinusoïdaux et/ou présentent des amplitudes différentes, ou dans lequel le mouvement de segmentation se compose d'au moins deux mouvements exécutés successivement, de préférence sinusoïdaux et/ou présentant des amplitudes différentes.

5. Procédé selon la revendication précédente, dans lequel un premier mouvement parmi les au moins deux mouvements est un mouvement principal de l' encoche de segmentation (14) par lequel l'encoche de segmentation (14) est déplacée entre un outil de garnissage (4) et la réserve (10) de filaments de poils de brosse en vrac (11) et/ou dans lequel un deuxième mouvement parmi les au moins deux mouvements est un mouvement supplémentaire de l'encoche de segmentation (14) que l'encoche de segmentation (14) exécute dans la zone de segmentation (16) de la réserve (10).

6. Procédé selon la revendication précédente, dans lequel le mouvement principal est produit par un moteur d'entraînement (7), en particulier par un arbre de sortie (8), d'un dispositif de segmentation (2) et/ou dans lequel le mouvement supplémentaire est produit par un actionneur (21), en particulier par un élément piézoélectrique, qui est disposé de préférence dans le flux de force entre le diviseur de faisceaux (13) sur lequel l'encoche de segmentation (14) est formée et un moteur d'entraînement (7) pour le diviseur de faisceaux (13).

7. Procédé selon l'une des revendications précédentes, dans lequel la fréquence et/ou l'amplitude du mouvement supplémentaire et/ou du mouvement principal sont prédéterminées par une unité de commande (22), de préférence programmable.

8. Dispositif de segmentation (2) pour la segmentation de faisceaux de poils (5) à partir d'une réserve (10) de filaments de poils de brosse en vrac (11), lequel dispositif de segmentation (2) comprend un diviseur de faisceaux (13) avec au moins une encoche de segmentation (14) et un magasin de poils de brosse (12) pour une réserve (10) de filaments de poils de brosse en vrac (11), **caractérisé en ce que** le dispositif de segmentation (2) comprend un dispositif d'entraînement (15) qui est conçu pour déplacer le diviseur de faisceaux (13) muni de l'au moins une encoche de segmentation (14) dans un mouvement de segmentation à travers une zone de segmentation (16) devant la réserve (10) de filaments de poils de brosse en vrac (11) de telle façon que l'encoche de segmentation (14) change au moins deux fois, de préférence au moins trois fois de sens de déplacement dans la zone de segmentation (16) de la réserve (10).

9. Dispositif de segmentation (2) selon la revendication précédente, dans lequel le dispositif de segmentation (2) est configuré par le dispositif d'entraînement (15) pour l'exécution du procédé selon l'une des revendications 1 à 7.

10. Dispositif de segmentation (2) selon l'une des revendications 8 ou 9, dans lequel le dispositif d'entraînement (15) comprend un moteur d'entraînement (7) et un engrenage (17), le moteur d'entraînement (7) étant relié au diviseur de faisceaux (13) par l'intermédiaire de l'engrenage (17) et l' engrenage (17) étant conçu pour transformer un mouvement d'un arbre de sortie (8) du moteur d'entraînement (7) en un mouvement du diviseur de faisceaux (13).

11. Dispositif de segmentation (2) selon la revendication 10, dans lequel l'engrenage (17) comprend une came de guidage (18), en particulier formée sur un double excentrique (19), qui détermine le mouvement de segmentation et/ou est en liaison d'entraînement avec le moteur d'entraînement (7).

12. Dispositif de segmentation (2) selon l'une des revendications 10 ou 11, dans lequel l'engrenage (17) comprend un mécanisme de bielle (20) avec lequel une partie au moins du mouvement de segmentation, en particulier le mouvement principal, de l'encoche de segmentation (14) peut être causé.

13. Dispositif de segmentation (2) selon l'une des revendications 10 à 12, dans lequel l'engrenage (17) comprend un actionneur (21), en particulier un élément piézoélectrique, qui est conçu pour exécuter un ou le mouvement supplémentaire de l'encoche de segmentation (14).

14. Dispositif de segmentation (2) selon la revendication 13, dans lequel l'actionneur (21) est configuré pour le déplacement longitudinal d'une tringle d'entraînement (30) de l'engrenage (17) reliée au diviseur de faisceaux (13) et/ou dans lequel l'actionneur (21) est disposé dans le flux de force entre le moteur d'entraînement (7) et le diviseur de faisceaux (13).

15. Dispositif de segmentation (2) selon l'une des revendications 10 à 14, dans lequel le dispositif d'entraînement (15) comprend une unité de commande (22) configurée pour commander le moteur d'entraînement (7) et/ou l'actionneur (21), de préférence dans lequel l'unité de commande (22) comporte une interface de données (23) pour la communication avec une mémoire de données (24), en particulier avec une mémoire de données en nuage.

16. Machine de garnissage de brosses (1) munie d'un dispositif de segmentation (2) selon l'une des revendications 8 à 15 et d'un dispositif de garnissage (3) avec un outil de garnissage (4) configuré pour mettre en place des faisceaux de poils de brosse (5) préparés par le dispositif de segmentation (2) dans un support de poils de brosse (6).

17. Machine de garnissage de brosses (1) selon la revendication 16, dans laquelle le dispositif de garnissage (3) et le dispositif de segmentation (2) peuvent être entraînés avec un moteur d'entraînement (7) commun.

18. Machine de garnissage de brosses (1) selon la revendication 17, dans lequel un arbre de sortie (8) du moteur d'entraînement (7) et l'outil de garnissage (4) sont reliés par l'intermédiaire d'un excentrique (9).
